# EUROPÄISCHE PATENTSCHRIFT

(11) **EP 4 052 926 B1**
(45) Veröffentlichungstag und Bekanntmachung des Hinweises auf die Patenterteilung: **23.10.2024**
(21) Anmeldenummer: 21208509.6
(22) Anmeldetag: 16.11.2021
(51) Int. Cl.: B60C 7/12, B60B 9/26, B60C 19/12, B60C 9/18

(54) **FAHRZEUGREIFEN**
VEHICLE TYRES
PNEUS DE VÉHICULE

(30) Priorität: 04.03.2021 DE 102021202113
(43) Veröffentlichungstag der Anmeldung: 07.09.2022
(73) Patentinhaber: Continental Reifen Deutschland GmbH, 30175 Hannover (DE)
(72) Erfinder: Gandyra, Stefan, 30165 Hannover (DE); Komischke, Ralf, 30165 Hannover (DE)
(74) Vertreter: Continental Corporation

(56) Entgegenhaltungen:
- EP-A1- 3 385 094
- EP-A1- 3 482 972
- EP-A2- 1 356 957
- WO-A1-01/12452
- WO-A1-2019/203857
- WO-A2-2011/104579
- CN-A- 111 532 089
- US-A- 4 504 761

## Beschreibung

Die Erfindung betrifft einen Fahrzeugreifen mit einer Rotationsachse und einem ringförmigen Karkassbereich, der von radial innenseitig in Wulsten endenden Seitenwänden und einer die Seitenwände verbindenden Karkasse begrenzt wird und bei in eine Felge eingesetzten Wulsten einen mit Druckluft befüllbaren Hohlraum umschließt, sowie einem radial außenseitig der Karkasse angeordneten Laufstreifen mit mindestens einer Verstärkungseinlage, die gemeinsam einen ringförmigen Außenbereich des Fahrzeugreifens bilden.

Fahrzeugreifen der eingangs genannten Art stellen als druckluftgefüllte Luftreifen die Standardbereifung von Personen- und Lastkraftwagen aller Art dar und werden auf Standardfelgen nach ETRTO montiert. Aufgrund der Druckluftfüllung sind diese stets mit dem Risiko verbunden, einen Ausfall durch Druckverlust zu erleiden. Dieser Druckverlust erfolgt häufig durch Fremdkörper, die die Lauffläche des Laufstreifens sowie darunterliegende Verstärkungslagen einschließlich der luftdichten Innenschicht des Fahrzeugreifens durchdringen und zu dem Druckverlust führen. Es ist daher bereits vorgeschlagen worden, den Laufstreifen mit Verdickungen als äußere Gummischicht zu fertigen oder auch weitere Verstärkungen der Gürtellagen oder auf der Innenschicht vorzusehen, die einen Durchstoß zum Beispiel eines Nagels oder einer Schraube zwar verhindern können, jedoch die verwendete Materialmenge je Fahrzeugreifen erhöhen und auch das Abrollverhalten desselben mit entsprechenden Komforteinbußen verschlechtern, weshalb diese Technologien zur Verhinderung eines Druckverlustes bei Standardreifen eher selten zu finden sind. Auch existieren Technologien zur Verhinderung eines Druckverlustes, beispielsweise durch Einbringung eines Dichtmittels in den Hohlraum, die den Fahrzeugreifen im Falle eines Durchstichs abdichten. Diese Fahrzeugreifen gelten als Reifen mit Notlaufeigenschaften, die üblicherweise nach ca. 80 km maximaler Fahrstrecke im Falle eines Druckverlustes ausgetauscht werden sollten.

Fahrzeugreifen, die nicht mit Druckluft gefüllt sind, finden sich in größerer Stückzahl eher bei Flurförderfahrzeugen oder Spezialanwendungen in Form von Vollgummireifen, bei denen mit Druckluft gefüllte Reifen keine ausreichende Traglast aufweisen oder zu empfindlich für den Betrieb sind. Derartige Vollgummireifen sind per se durchstichsicher und können keinen Druckverlust erleiden, sind allerdings aufgrund des fehlenden Luftpolsters nur selten komfortabel. Der Komfort kann lediglich über die Steifigkeit und/oder Anordnung der verwendeten Gummimischungen, die Anordnung und/oder Ausführung von Verstärkungseinlagen sowie über das Fahrwerk des Fahrzeugs selbst beeinflusst werden, erreicht aber in Summe nicht den Komfortlevel eines mit Druckluft befüllbaren Fahrzeugreifens. Derartige Vollgummireifen können im Übrigen nicht auf Standardfelgen für Luftreifen montiert werden, sondern benötigen eine angepasste Felgengeometrie.

Aus der US 4 504 761 A ist ein Reifen bekannt geworden, der zwischen einer inneren Karkasse und einer außenseitig umgebenden und im Bereich der Wulste mit der inneren Karkasse verbundenen Außenstruktur einen Hohlraum definiert, in welchem Piezoelemente zur Energieerzeugung angeordnet werden sollen, um die Bordelektrik eines Fahrzeuges mit Strom zu speisen. Ein solcher Reifen ist jedoch in der Praxis nicht umsetzbar.

Darüber hinaus sind zumindest im Versuchsstadium Bauformen von Fahrzeugreifen bekannt geworden, die als sogenannte "airless tire" unter Verzicht auf einen luftgefüllten Hohlraum auf ein annähernd vergleichbares Komfortniveau kommen sollen. Derartige Fahrzeugreifen bestehen häufig aus zwei Ringen unterschiedlichen Durchmessers, wobei der kleinere Ring auf einer Felge montiert ist, und der größere Ring mit dem kleineren Ring durch Segmente verbunden ist, die aufgrund ihrer Formgestaltung als federnde Elemente ausgeführt sind. Der äußere Ring beinhaltet am Außendurchmesser den Laufstreifen, der den Kontakt zur Fahrbahn herstellt. Beispielhaft sei in diesem Zusammenhang auf die WO 2019/203857 A1 verwiesen.

Nachteilig bei derartigen Bauformen ohne Druckluftbefüllung ist es, dass diese komplex in der Herstellung sind, durch die offene Segmentstruktur ein äußerlich anderes Erscheinungsbild als ein luftgefüllter Standardreifen aufweisen und eine speziell angepasste Felge benötigen, was zu einer geringeren Felgenauswahl mit entsprechendem Kostenniveau führt. Die seitlich offene Segmentstruktur bringt überdies das Problem mit sich, dass sich Fremdpartikel, wie Schlamm, Schneematsch, Sand in der offenen Segmentstruktur ansammeln können, die zu einer erheblichen Reifenunwucht führen und sodann aufwendig entfernt werden müssen.

Der weitere Stand der Technik wird gebildet durch die EP 3 482 972 A1, die gattungsbildende EP 3385094 A1 und die WO 2011/104579 A2.

Aufgabe der Erfindung ist es, einen Fahrzeugreifen der eingangs genannten Art vorzuschlagen, der sich auf einer Standardfelge für Fahrzeugluftreifen ohne Einschränkungen montieren lässt, dabei jedoch unempfindlich gegenüber Durchstoß eines Fremdkörpers ist.

Zur Lösung der gestellten Aufgabe wird erfindungsgemäß die Ausgestaltung eines Fahrzeugreifens gemäß den Merkmalen des Patentanspruches 1 vorgeschlagen. Vorteilhafte Ausgestaltungen und Weiterbildungen der Erfindung sind Gegenstand der abhängigen Ansprüche.

Der erfindungsgemäße Vorschlag sieht vor, dass der Fahrzeugreifen nach wie vor mit einem mit Druckluft befüllbaren Karkassbereich als radial innerstem Ringbereich ausgeführt wird, der insoweit in an sich bekannter Weise mit den radial innenseitig vorgesehenen Wulsten der Seitenwände in eine Standardfelge eingesetzt werden kann. Erfindungsgemäß ist der vom Laufstreifen und mindestens einer Verstärkungseinlage gebildete ringförmige Außenbereich des Fahrzeugreifens nicht unmittelbar radial außenseitig auf den Karkassbereich aufgebracht, sondern unter Zwischenlage eines ringförmigen, nicht mit Druckluft befüllbaren Strukturbauteils mit dem radial innenseitigen Karkassbereich verbunden, dergestalt, dass der Außenbereich nicht unmittelbar radial außenseitig auf den Karkassbereich aufgebracht ist und der Karkassbereich vom Außenbereich mit der Lauffläche durch das zwischenliegende Strukturbauteil beabstandet ist.

Erfindungsgemäß wird der Fahrzeugreifen somit als Hybridreifen ausgeführt und besteht aus einem mit der Felge verbundenen druckluftgefüllten inneren Ring, d. h. dem Karkassbereich, sowie einem radial außen benachbarten drucklosen Ring aus dem Strukturbauteil, welches unter Normal- bzw. Umgebungsdruck steht und nicht mit Druckluft befüllbar ist. Noch weiter radial außerhalb schließt sich der ebenfalls nicht mit Druckluft befüllbare, sondern unter Normal- bzw. Umgebungsdruck stehende Außenbereich an, der mit dem Laufstreifen die äußere Kontaktfläche zur Fahrbahn bildet.

Der innere, druckluftgefüllte Karkassbereich entspricht in seinen radial inneren Anschlussmaßen den üblichen Standardreifen und lässt sich somit auf einer Standardfelge montieren, ist aber hinsichtlich der Höhe der Seitenwände flacher als ein Standard-Luftreifen ausgeführt, etwa vergleichbar mit derzeit handelsüblichen Niederquerschnittsreifen abzüglich Gürtellagen und Laufstreifen. Die radial außenseitig auf den Karkassbereich aufgebrachten weiteren ringförmigen Bereiche, nämlich Strukturbauteil und Außenbereich verleihen dem Fahrzeugreifen zusammen mit dem Karkassbereich eine Gesamthöhe, die im Wesentlichen der von Standard-Luftreifen bekannten Gesamthöhe entspricht.

Neben der uneingeschränkten Montagefähigkeit auf Standardfelgen erreicht der erfindungsgemäß ausgestaltete Fahrzeugreifen durch die nicht mit Druckluft gefüllte Ausgestaltung der radial äußeren Bereiche, d. h. Außenbereich und Strukturbauteil, eine signifikante Verringerung der Gefahr eines Durchstichs bei den üblichen Fremdkörpern im Bereich des Laufstreifens, da diese den mit Druckluft gefüllten Karkassbereich üblicherweise nicht erreichen können. Auch wird die Gefahr einer Beschädigung der Seitenwand beim Überfahren von Bordsteinkanten und dergleichen bedeutend reduziert.

Nach einem Vorschlag der Erfindung umfasst das Strukturbauteil eine Vielzahl von Speichen oder Konusrollen, die sich zwischen dem radial inneren und dem radial äußeren Umfangsrand des Strukturbauteils erstrecken und eine kraftschlüssige Verbindung zwischen dem Außenbereich und dem Karkassbereich ausbilden. Sie dienen dazu, die einwirkenden Kräfte zwischen Fahrzeug und Fahrbahn zu übertragen, in dem die Kräfte zwischen dem Außenbereich, der über den Laufstreifen den Kontakt zur Fahrbahn bildet, und dem Karkassbereich, der die Kräfte auf die Fahrzeugfelge überträgt, durch das Strukturbauteil geleitet werden. Die Ausbildung des Strukturbauteils mit einer Vielzahl von Speichen ermöglicht eine Gewichtsreduktion sowie Verminderung des Materialverbrauchs, überdies können die Speichen aufgrund einer gewissen elastischen Verformbarkeit sowie der Dämpfung von Abrollgeräuschen das Komfortniveau des Fahrzeugreifens verbessern.

Sofern das Strukturbauteil anstelle der Speichen insbesondere schräggestellte Konusrollen aufweist, werden deren Aufhängungen vorzugsweise mit dem inneren, druckluftgefüllten Karkassbereich verbunden, wodurch die sonst steifen Aufhängungsstrukturen vorteilhaft abgefangen werden können und eine solche Ausgestaltung mit schräggestellten Konusrollen einen omnidirektionalen Betrieb des erfindungsgemäßen Fahrzeugreifens ermöglicht.

Nach einem weiteren Vorschlag der Erfindung kann das Strukturbauteil mehrteilig aus mehreren, gleichförmig um die Rotationsachse des Fahrzeugreifens angeordneten Ringsegmenten gebildet werden, wodurch sich eine vereinfachte Herstellung derselben ergibt. Diese mehreren Ringsegmente des Strukturbauteils können über geeignete Verbindungsmittel zu einem einstückigen ringförmigen Strukturbauteil verbunden werden. Alternativ kann das ringförmige Strukturbauteil auch per se einstückig bzw. einteilig ausgebildet sein.

Nach einem weiteren Vorschlag der Erfindung kann das Strukturbauteil direkt und unmittelbar mit dem Karkassbereich verbunden sein oder aber radial innenseitig über einen Zwischenring mit dem Karkassbereich verbunden sein.

Das Strukturbauteil und insbesondere die Speichen desselben können nach einem weiteren Vorschlag der Erfindung aus geeignetem Gummi- und/oder

Kunststoffmaterial hergestellt sein und gegebenenfalls auch Verstärkungsmaterialien, wie zum Beispiel Verstärkungsfasern enthalten.

Nach einem weiteren Vorschlag der Erfindung kann das Strukturbauteil auch mit Sensoren, Aktoren, energieerzeugenden Modulen, Kommunikationsmodulen, Anzeigemodulen oder Kombinationen derselben ausgerüstet werden. Beispielsweise können Sensoren verbaut werden, die Signale zu erfassten Fahrzuständen ausgeben. Beispiele derartiger Sensoren umfassen Beschleunigungssensoren, Drucksensoren (zum Beispiel Biegebalken) oder andere Sensoren. Ebenso ist es denkbar, Aktoren zu verbauen, die das Verhalten des Fahrzeugreifens beeinflussen können, beispielsweise in dem diese die Höhe des Strukturbauteils und/oder dessen Steifheit beeinflussen und damit das Abrollverhalten und den Komfort des Fahrzeugreifens einstellbar gestalten. In Kombination mit geeigneten Sensoren sind dabei geschlossene Regelkreise als Regelsysteme im Fahrzeugreifen realisierbar. Mittels energieerzeugender Module, die ebenfalls im Strukturbauteil angeordnet werden können, kann beim Umlauf des Reifens am Fahrzeug Energie in Form von elektrischem Strom erzeugt werden, um beispielsweise die vorgenannten Sensoren und Aktoren mit Betriebsspannung zu versorgen, sodass idealerweise auf eine gesonderte Stromversorgung in Form von Batterien und dergleichen verzichtet werden kann. Ebenfalls können elektrische Verbraucher, wie Leuchtkörper, zum Beispiel LEDs oder kleine flexible Displays vorgesehen werden, die zum Beispiel im Bereich der Seitenwand oder an anderen geeigneten Stellen des Fahrzeugreifens verbaut werden können. Sofern Sensoren zur Erfassung von Fahrzuständen vorgesehen sind, können diese mit geeigneten Kommunikationsmodulen zusammenwirken, um beispielsweise entsprechende Meßsignale an fahrzeugeigene Steuer- und Regeleinrichtungen zu übermitteln. Zur Vermeidung der Ansammlung von Fremdkörpern im Strukturbauteil, etwa in Freiräumen zwischen benachbarten Speichen, ist erfinderisch vorgesehen das Strukturbauteil im Bereich seiner Seitenflächen mit einer kreisringförmigen flexiblen Abdeckung abzudecken, deren radial innerer Rand mit dem Karkassbereich und deren radial äußerer Rand mit dem Außenbereich des Fahrzeugreifens verbunden ist. Eine solche flexible Abdeckung kann beispielsweise von einer geeigneten Materiallage auf Basis von Gummi ausgebildet sein. Durch die Abdeckung wird der im Strukturbauteil ausgebildete offene Zwischenraum gegen seitlich eindringende Fremdkörper, wie Matsch, Steine, Schnee und Wasser abgedichtet, wobei vorzugsweise die Abdeckung das Strukturbauteil frei überspannt und nur am Karkassbereich sowie dem Außenbereich fixiert ist, um die notwendige Verformbarkeit des Strukturbauteils während des Reifendurchlaufs im Fahrbahnkontakt sicherzustellen.

Weiterhin kann vorgesehen sein, dass die Abdeckung derart vorgeformt ist, dass sie sich bei Kompression des Außenbereichs, etwa bei Überfahren eines Hindernisses oder einer Kante, beim Beschleunigen und Verzögern sowie bei Lenkbewegungen elastisch in Richtung der dem Strukturbauteil abgewandten Außenseite verformt, wodurch Abrieb zwischen der Innenoberfläche der Abdeckung und dem seitlichen Randbereich des Strukturbauteils vermieden wird. Ferner ermöglicht eine derartige Ausführung einen gewissen Abstand zwischen der Innenoberfläche der Abdeckung und dem seitlichen Randbereich des Strukturbauteils, wodurch eine Luftbewegung innerhalb des nicht druckluftgefüllten Strukturbauteils ermöglicht ist.

Die Verbindung zwischen den einzelnen Baugruppen bzw. ringförmigen Bereichen des erfindungsgemäßen Fahrzeugreifens, nämlich Karkassbereich mit druckluftgefülltem Hohlraum, Seitenwänden, Wulsten, Kernen etc., Strukturbauteil mit Speichen oder Aufhängungen für Konusrollen sowie gegebenenfalls Zwischenringen und dem Außenbereich mit Laufstreifen und mindestens einer Verstärkungseinlage kann unter weitgehender Nutzung bereits vorhandener Herstell- und Montageverfahren und in Abhängigkeit von den verwendeten Materialien an den Fügestellen zum Beispiel mittels Verklebung, Vulkanisation, mechanischer Verbindung oder als Kombination derselben erfolgen. Insbesondere die Herstellung des mit Druckluft befüllbaren Karkassbereichs sowie des Außenbereichs kann auf üblichen Herstellungsanlagen für Standard-Luftreifen durchgeführt werden, wodurch eine Minimierung der Investitionskosten erfolgt.

Da der Karkassbereich beim erfindungsgemäßen Fahrzeugreifen nur eine relativ geringe Höhe aufweist und das radial außenseitig liegende Strukturbauteil mit dem darauf aufgebrachten Außenbereich mit Laufstreifen eine hohe Steifigkeit und Formstabilität aufweist, weist der erfindungsgemäße Fahrzeugreifen auch bei Druckverlust im Karkassbereich Notlaufeigenschaften auf, die auch bei dem nur noch unwahrscheinlichen Druckverlust eine Weiterfahrt des mit dem erfindungsgemäßen Fahrzeugreifen ausgerüsteten Fahrzeugs gewährleisten können.

Weitere Ausgestaltungen und Einzelheiten der Erfindung werden nachfolgend anhand eines Ausführungsbeispiels in der Zeichnung erläutert. Es zeigen:
- Figur 1: in perspektivischer Darstellung einen Fahrzeugreifen gemäß der Erfindung;
- Figur 2: einen Querschnitt durch den Fahrzeugreifen gemäß Figur 1.

Aus den Figuren ist ein Fahrzeugreifen 1 ersichtlich, der beispielsweise an einem Personenkraftwagen auf einer handelsüblichen Felge 2 montiert werden kann und eine zentrale Rotationsachse A aufweist.

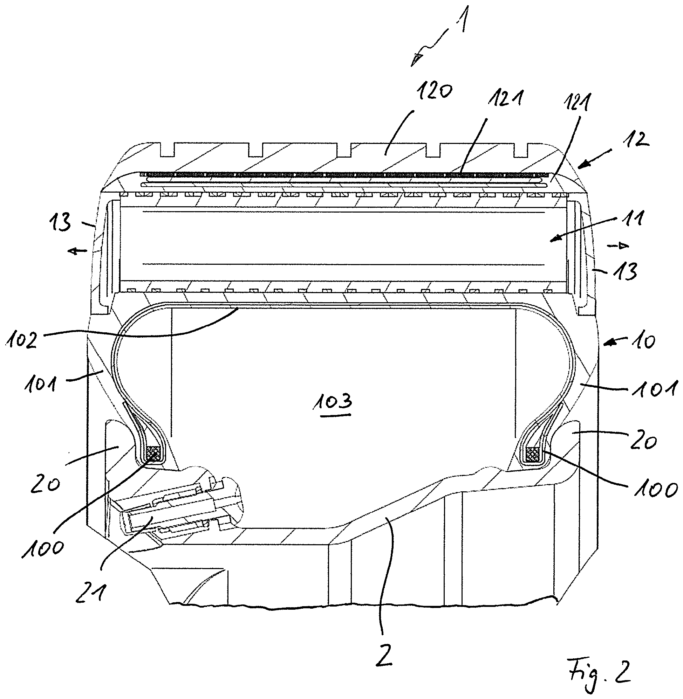

Wie insbesondere aus der Querschnittsdarstellung gemäß Figur 2 ersichtlich, ist der Fahrzeugreifen 1 radial innenseitig mit einem Karkassbereich 10 ausgebildet, der Seitenwände 101 und eine radial außenseitig die Seitenwände 101 verbindende Karkasse 102 umfasst, die in nicht näher dargestellter, jedoch an sich bekannter Weise mit Verstärkungslagen sowie einer luftdichten Innenschicht versehen sind. Radial innenseitig enden die Seitenwände 101 ebenfalls in an sich bekannter Weise in Wulsten 100, die mit nicht näher dargestellten Drahtkernen sowie einem Apex versehen sind.

Aufgrund dieser an sich bekannten Bauform des Karkassbereichs 10 kann der dargestellte Fahrzeugreifen 1 mit den Wulsten 100 zwischen den Felgenhörnern 20 der Felge 2 einer üblichen Bauform für Fahrzeugluftreifen eingesteckt und montiert werden. In diesem montierten Zustand umschließt der Karkassbereich 10 gemeinsam mit der Felge 2 einen Hohlraum 103, der über ein in die Felge 2 eingesetztes Ventil 21 mit Druckluft befüllt wird.

Radial außenseitig weist der Fahrzeugreifen 1 einen Außenbereich 12 auf, der den profilierten Laufstreifen 120 sowie mehrere Verstärkungseinlagen 121 umfasst. Der Laufstreifen 120 bildet umfangsseitig die Lauffläche, mit welchem der Fahrzeugreifen auf der Fahrbahn abrollt.

Wie insbesondere aus der Schnittdarstellung gemäß Figur 2 ersichtlich, steht der die Lauffläche 120 umfassende Außenbereich 12 nicht unmittelbar mit dem druckluftgefüllten Karkassbereich 10 und der die Seitenwände 101 verbindenden Karkasse 102 in flächigem Kontakt, sondern der Karkassbereich 10 erstreckt sich lediglich bis etwa zur Hälfte der Gesamthöhe des Fahrzeugreifens 1. In dem ringförmigen Raum zwischen dem radial innenseitigen Karkassbereich 10 und dem radial außenseitigen Außenbereich 12 ist ein ringförmiges, nicht mit Druckluft befüllbares Strukturbauteil 11 angeordnet, welches aus einem geeigneten Gummi- und/oder Kunststoffmaterial gebildet ist und eine Vielzahl von durch Hohlräume voneinander beabstandete Speichen 110 umfasst, wobei die Speichen 110 so angeordnet sind, dass die dazwischenliegenden Hohlräume einen etwa dreieckförmigen Querschnitt quer zur Laufrichtung des Fahrzeugreifens 1 aufweisen.

Der druckluftgefüllte Karkassbereich 10 ist von daher durch das zwischenliegende Strukturbauteil 11 vom Außenbereich 12 mit der Lauffläche 120 radial nach innen beabstandet, sodass im Falle eines Durchstichs durch die Lauffläche 120, etwa verursacht durch eine Schraube oder einen Nagel, der Hohlraum 103 des Karkassbereichs 10 regelmäßig nicht erreicht wird und insoweit ein Druckverlust und Ausfall des Fahrzeugreifens 1 trotz des erfolgten Durchstichs vermieden wird. Andererseits gewährleistet der konventionelle Aufbau des lediglich in seiner radialen Höhe reduzierten Karkassbereichs 10 die uneingeschränkte Montierbarkeit des Fahrzeugreifens 1 auf Standardfelgen 2.

Die im Fahrbetrieb auftretenden Kräfte und Belastungen des Fahrzeugreifens 1 werden vom Strukturbauteil 11 zwischen Karkassbereich 10 und Außenbereich 12 übertragen, da das Strukturbauteil 11 eine kraftschlüssige Verbindung zwischen Karkassbereich 10 und Außenbereich 12 herstellt. Die Speichen 110 des Strukturbauteils 11 steigern darüber hinaus den Komfort und vermindern die Übertragung von Abrollgeräuschen.

Ferner können im Strukturbauteil 11 auch Sensoren, Aktoren sowie weitere elektronische Baugruppen integriert werden, um Fahrzustände zu ermitteln und an die Fahrzeugelektronik zu übermitteln, die Fahreigenschaften des Fahrzeugreifens 1 zu verändern etc.

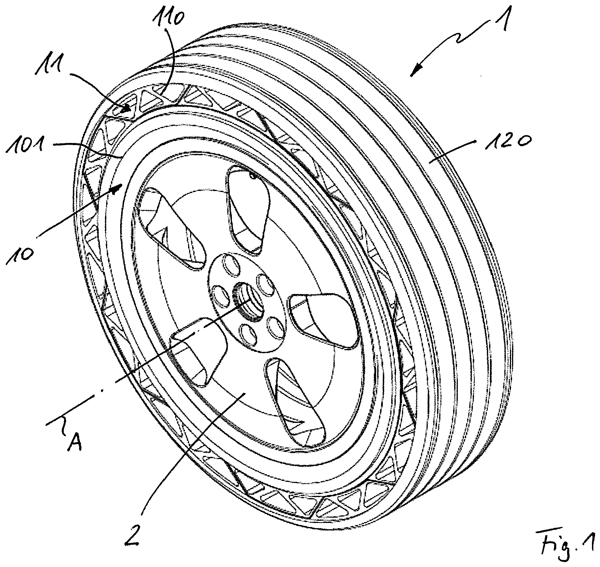

Die in der Darstellung gemäß Figur 1 offene Struktur des Strukturbauteils 11 ist darüber hinaus durch in der Figur 2 ersichtliche seitliche Abdeckungen 13, zum Beispiel aus einem elastischen Gummistreifen, abgedeckt. Dabei wird der Gummistreifen 13 mit seinem radial inneren Randbereich am Karkassbereich 10 und mit seinem radial äußeren Randbereich am Außenbereich 12 des Fahrzeugreifens 1 befestigt und überspannt den Bauraum des Strukturbauteils 11 frei. Durch eine entsprechende Formgestaltung ist überdies sichergestellt, dass sich die Abdeckung 13 bei radialer Kompression des Fahrzeugreifens 1 gemäß der Pfeildarstellung in Figur 2 nach außen verformt, um eine Luftbewegung innerhalb des Strukturbauteils 11 zuzulassen und Abrieb an der Innenoberfläche der Abdeckung 13 zu vermeiden. Durch die Abdeckungen 13, die in der Figur 1 nicht eingezeichnet sind, erhält der Fahrzeugreifen 1 trotz seiner durchstichresistenten Ausgestaltung eine vergleichbare Optik wie ein konventioneller Fahrzeugluftreifen. Beschädigungen der Abdeckung 13 durch Kontakt mit Fremdkörpern oder Durchstich führt nicht zum Ausfall des Reifens, da in diesem Bereich keine Druckluftfüllung vorliegt.

Zur Herstellung eines derartigen Fahrzeugreifens 1 wird der Karkassbereich 10 konventionell auf vorhandenem Maschinenequipment hergestellt, wobei lediglich die geringere Bauhöhe durch entsprechende Dimensionierung der Komponenten erzeugt wird. Anschließend wird das gesondert hergestellte Strukturbauteil 11 aufgebracht, welches entweder einteilig oder mehrteilig aus mehreren, gleichförmig um die Rotationsachse A angeordneten Ringsegmenten gebildet ist, die mit geeigneten Verbindungsmitteln auch untereinander zu einem zusammenhängenden ringförmigen Strukturbauteil 11 verbunden werden können. Das solchermaßen gebildete Strukturbauteil 11 kann entweder unmittelbar oder unter Zwischenlage eines entsprechenden Zwischenringes auf dem Karkassbereich 10 aufgebracht werden. Anschließend kann der Außenbereich 12 mit Verstärkungslagen 121 und Laufstreifen 120 beispielsweise auf konventionellen Reifenbaumaschinen aufgebracht werden. In Abhängigkeit von den verwendeten Materialien an den Fügestellen können die Verbindungen mittels Verklebung, Vulkanisation, mechanischer Verbindung oder als Kombination dieser Verbindungsarten erfolgen.

Der vorangehend dargestellte Fahrzeugreifen 1 ist somit als Hybridreifen ausgebildet und umfasst radial innenliegend einen druckluftgefüllten Teil, den Karkassbereich 10, und ist radial außenseitig von drucklosen, d. h. unter Normal- bzw. Umgebungsdruck stehenden drucklosen Teilen, dem Strukturbauteil 11 sowie dem Außenbereich 12, umgeben. Trotz der Montierbarkeit auf für Standard-Luftreifen vorgesehenen Standardfelgen 2 erreicht der dargestellte Fahrzeugreifen 1 eine deutlich verbesserte Pannensicherheit, insbesondere Durchstichfestigkeit, und weist auch im Falle eines unwahrscheinlichen Druckverlusts aus dem Karkassbereich 10 Notlaufeigenschaften auf und ähnelt insbesondere in der Ausführungsform mit seitlichen Abdeckungen 13 der Optik eines herkömmlichen Luftreifens.

Abhängig von der Ausführung und Ausgestaltung des Strukturbauteils 11 können die Anordnung und/oder die Anzahl der üblicherweise vorgesehenen Verstärkungsbauteile und Verstärkungslagen 121 variiert und gegebenenfalls auch minimiert werden, wodurch Produktionskosten eingespart werden können.

Erforderliche oder optional vorzusehenden Sensoren im Fahrzeugreifen 1 sowie weitere elektronische Baugruppen können in den nicht mit druckluftgefüllten Teil des Fahrzeugreifens, insbesondere im Strukturbauteil 11, leicht implementiert werden, da das Strukturbauteil 11 bei Herstellung des Fahrzeugreifens 1 gegebenenfalls nicht in einer Presse vulkanisiert werden muss. Der beim Vulkanisieren vorherrschende hohe Druck und die hohe Temperatur stellen sich bei bisheriger Sensorimplementierung stets als problematisch dar. Diese Bedingungen treten beim vorangehend erläuterten Fahrzeugreifen 1 nicht auf.

Aufgrund der weitgehend konventionellen Optik sowie der Eignung für Standard-Fahrzeugfelgen und die hohe Pannensicherheit gepaart mit vorteilhaften Fahreigenschaften erreicht der vorangehend erläuterte Fahrzeugreifen eine besonders hohe Kundenakzeptanz und -zufriedenheit.

### Bezugszeichenliste

- 1:: Fahrzeugreifen
- 2:: Felge
- 10:: Karkassbereich
- 11:: Strukturbauteil
- 12:: Außenbereich
- 13:: Abdeckung
- 20:: Felgenhorn
- 21:: Ventil
- 100:: Wulst
- 101:: Seitenwand
- 102:: Karkasse
- 103:: Hohlraum
- 110:: Speichen
- 120:: Laufstreifen
- 121:: Verstärkungseinlage

- A:: Rotationsachse

## Patentansprüche

1. Fahrzeugreifen (1) mit einer Rotationsachse (A) und einem ringförmigen Karkassbereich (10), der von radial innenseitig in Wulsten (100) endenden Seitenwänden (101) und einer die Seitenwände (101) verbindenden Karkasse (102) begrenzt wird und bei in eine Felge (2) eingesetzten Wulsten (100) einen mit Druckluft befüllbaren Hohlraum (103) umschließt, sowie einem radial aussenseitig der Karkasse (102) angeordneten Laufstreifen (120) mit mindestens einer Verstärkungseinlage (121), die gemeinsam einen ringförmigen Außenbereich (12) des Fahrzeugreifens (1) bilden, der Außenbereich (12) unter Zwischenlage eines ringförmigen, nicht mit Druckluft befüllbaren Strukturbauteils (11) mit dem radial innenseitigen Karkassbereich (10) verbunden ist, dergestalt, dass der Außenbereich (12) nicht unmittelbar radial außenseitig auf den Karkassbereich (10) aufgebracht ist und der Karkassbereich (10) vom Außenbereich (12) mit der Lauffläche (120) durch das zwischenliegende Strukturbauteil (11) beabstandet ist **dadurch gekennzeichnet, dass** das Strukturbauteil (11) im Bereich seiner Seitenflächen mit einer kreisringförmigen flexiblen Abdeckung (13) abgedeckt ist, deren radial innerer Rand mit dem Karkassbereich (10) und der radial äußere Rand mit dem Außenbereich (12) des Fahrzeugreifens (1) verbunden ist.

2. Fahrzeugreifen (1) nach Anspruch 1, **dadurch gekennzeichnet, dass** das Strukturbauteil (11) eine Vielzahl von Speichen (110) oder Konusrollen umfasst, die sich zwischen dem radial inneren und dem radial äußeren Umfangsrand des Strukturbauteiles (11) erstrecken und eine kraftschlüssige Verbindung zwischen dem Außenbereich (12) und dem Karkassbereich (10) ausbilden.

3. Fahrzeugreifen (1) nach einem der Ansprüche 1 oder 2, **dadurch gekennzeichnet, dass** das Strukturbauteil (11) einteilig oder mehrteilig aus mehreren, gleichförmig um die Rotationsachse (A) angeordneten Ringsegmenten gebildet ist.

4. Fahrzeugreifen (1) nach einem der Ansprüche 1 bis 3, **dadurch gekennzeichnet, dass** das Strukturbauteil (11) unmittelbar oder unter Zwischenlage eines Zwischenringes mit dem Karkassbereich (10) verbunden ist.

5. Fahrzeugreifen (1) nach einem der Ansprüche 1 bis 4, **dadurch gekennzeichnet, dass** das Strukturbauteil (11) aus Gummi und/oder Kunststoff hergestellt ist.

6. Fahrzeugreifen (1) nach Anspruch 5, **dadurch gekennzeichnet, dass** das Strukturbauteil (11) Verstärkungsmaterialien enthält.

7. Fahrzeugreifen (1) nach einem der Ansprüche 1 bis 6, **dadurch gekennzeichnet, dass** das Strukturbauteil (11) mit Sensoren, Aktoren, energieerzeugenden Modulen, Kommunikationsmodulen, Anzeigemodulen oder Kombinationen derselben ausgerüstet ist.

8. Fahrzeugreifen nach einem der vorhergehenden Ansprüche, **dadurch gekennzeichnet, dass** die Abdeckung (13) derart vorgeformt ist, dass sie sich bei Kompression des Außenbereichs (12) elastisch in Richtung der dem Strukturbauteil (11) abgewandten Außenseite verformt.

## Claims

1. Vehicle tyre (1) with an axis of rotation (A) and an annular carcass region (10), which is delimited by sidewalls (101), ending radially on the inside in beads (100), and a carcass (102), connecting the sidewalls (101), and at beads (100) inserted into a wheel rim (2) encloses a cavity (103) that can be filled with compressed air, and also with a tread (120), which is arranged radially outside the carcass (102) and has at least one reinforcing ply (121), which together form an annular outer region (12) of the vehicle tyre (1), the outer region (12) is connected with the interposition of an annular structural component (11), which cannot be filled with compressed air, to the radially inner carcass region (10) in such a manner that the outer region (12) is not applied directly radially on the outside of the carcass region (10), and the carcass region (10) is spaced apart from the outer region (12) with the tread (120) by the interposed structural component (11), **characterized in that** the structural component (11) is covered in the region of its side surfaces by a circular-ring-shaped flexible covering (13), the radially inner edge of which is connected to the carcass region (10) and the radially outer edge to the outer region (12) of the vehicle tyre (1).

2. Vehicle tyre (1) according to Claim 1, **characterized in that** the structural component (11) comprises a multiplicity of spokes (110) or conical rollers, which extend between the radially inner circumferential edge and the radially outer circumferential edge of the structural component (11) and form a frictionally engaging connection between the outer region (12) and the carcass region (10).

3. Vehicle tyre (1) according to either of Claims 1 and 2, **characterized in that** the structural component (11) is formed as a single part or in multiple parts from a plurality of ring segments arranged uniformly about the axis of rotation (A).

4. Vehicle tyre (1) according to one of Claims 1 to 3, **characterized in that** the structural component (11) is connected to the carcass region (10) directly or with the interposition of an intermediate ring.

5. Vehicle tyre (1) according to one of Claims 1 to 4, **characterized in that** the structural component (11) is produced from rubber and/or plastic.

6. Vehicle tyre (1) according to Claim 5, **characterized in that** the structural component (11) contains reinforcing materials.

7. Vehicle tyre (1) according to one of Claims 1 to 6, **characterized in that** the structural component (11) is equipped with sensors, actuators, energy-generating modules, communication modules, display modules or combinations thereof.

8. Vehicle tyre according to one of the preceding claims, **characterized in that** the covering (13) is preshaped in such a manner that it is deformed elastically in the direction of the outer side facing away from the structural component (11) when the outer region (12) is compressed.

## Revendications

1. Pneumatique de véhicule (1) avec un axe de rotation (A) et une zone de carcasse annulaire (10), qui est délimitée par des parois latérales (101) se terminant radialement à l'intérieur par des talons (100) et par une carcasse (102) reliant les parois latérales (101) et qui, lorsque les talons (100) sont insérés dans une jante (2), entoure une cavité (103) apte à être remplie d'air comprimé, ainsi qu'une bande de roulement (120) agencée radialement à l'extérieur de la carcasse (102) et comportant au moins un insert de renforcement (121), qui forment ensemble une zone extérieure annulaire (12) du pneumatique de véhicule (1), la zone extérieure (12) étant reliée à la zone de carcasse (10) située radialement à l'intérieur, avec interposition d'un élément structurel (11) de forme annulaire, non remplissable par de l'air comprimé, de telle sorte que la zone extérieure (12) n'est pas appliquée directement radialement à l'extérieur sur la zone de carcasse (10) et que la zone de carcasse (10) est espacée de la zone extérieure (12) avec la surface de roulement (120) par l'élément structurel (11) intercalé, **caractérisé en ce que** l'élément structurel (11) est recouvert dans la zone de ses surfaces latérales par un recouvrement flexible (13) en forme d'anneau circulaire, dont le bord radialement intérieur est relié à la zone de carcasse (10) et le bord radialement extérieur est relié à la zone extérieure (12) du pneumatique de véhicule (1).

2. Pneumatique de véhicule (1) selon la revendication 1, **caractérisé en ce que** l'élément structurel (11) comprend une pluralité de rayons (110) ou de rouleaux coniques qui s'étendent entre le bord périphérique radialement intérieur et le bord périphérique radialement extérieur de l'élément structurel (11) et qui forment une liaison de force entre la zone extérieure (12) et la zone de carcasse (10).

3. Pneumatique de véhicule (1) selon l'une des revendications 1 ou 2, **caractérisé en ce que** l'élément structurel (11) est formé en une ou plusieurs parties de plusieurs segments annulaires agencés uniformément autour de l'axe de rotation (A).

4. Pneumatique de véhicule (1) selon l'une des revendications 1 à 3, **caractérisé en ce que** l'élément structurel (11) est relié à la zone de carcasse (10) directement ou avec interposition d'un anneau intermédiaire.

5. Pneumatique de véhicule (1) selon l'une des revendications 1 à 4, **caractérisé en ce que** l'élément structurel (11) est fabriqué en caoutchouc et/ou en matière plastique.

6. Pneumatique de véhicule (1) selon la revendication 5, **caractérisé en ce que** l'élément structurel (11) contient des matériaux de renforcement.

7. Pneumatique de véhicule (1) selon l'une des revendications 1 à 6, **caractérisé en ce que** l'élément structurel (11) est équipé de capteurs, d'actionneurs, de modules de production d'énergie, de modules de communication, de modules d'affichage ou de combinaisons de ceux-ci.

8. Pneumatique de véhicule selon l'une des revendications précédentes, **caractérisé en ce que** le recouvrement (13) est préformé de telle sorte qu'il se déforme élastiquement en direction de la face extérieure opposée à l'élément structurel (11) en cas de compression de la zone extérieure (12).
